# EUROPEAN PATENT SPECIFICATION

(11) **EP 2 179 706 B1**
(45) Date of publication and mention of the grant of the patent: **09.11.2011**
(21) Application number: 09173755.1
(22) Date of filing: 22.10.2009
(51) Int. Cl.: A61C 13/01

(54) **Plate element for manufacturing a dental prosthesis**
Plattenförmiges Element zur Herstellung einer Zahnprothese
Plaquette servant à la fabrication d'une prothèse dentaire

(30) Priority: 23.10.2008 IT TO20080780
(43) Date of publication of application: 28.04.2010
(73) Proprietor: Major Prodotti Dentari S.P.A., 10024 Moncalieri (TO) (IT)
(72) Inventor: Preti, Giulio, I-10024, MONCALIERI (Torino) (IT); Bassi, Francesco, I-12040, S. ALBANO STURA (Cuneo) (IT); Gassino, Gianfranco, I-10152, TORINO (IT); Notaro, Vincenzo, I-10024, MONCALIERI (Torino) (IT); Gentile, Francesco, I-10046, POIRINO (Torino) (IT)
(74) Representative: Fioravanti, Corrado

(56) References cited:
- DE-A1- 4 306 147
- FR-A- 2 684 541
- US-A- 4 906 186

## Description

The present invention refers to a plate element for the manufacture of a maxillary dental prosthesis. More specifically, the invention concerns a curved plate element and a method for the positioning and modelling of a malleable material capable of temporarily supporting the incisor and molar teeth according to positions and orientations that will then be fixed permanently in the prosthesis.

According to one of the most common methods used up to now to make a total prosthesis, the dental technician builds two so-called "bases" from resin each having a face carrying the impression of one of the two maxillary and mandibular edentulous arches. On the face of each base opposite the one having the impression one or more *wax rims* are applied, which simulate in position and size the dental arches and which act as a malleable and temporary support for the artificial teeth (incisor and molar teeth) that will make up the prosthesis. Each base, provided with the relative wax rim, is inserted into the edentulous patient's mouth. The dentist must shape the rim with particular precision according to the distance between the edentulous arches and certain anthropometric parameters (bi-pupillary plane and Camper's sagittal plane), since the contour of the rim has a determinant effect on the orientation of the occlusal plane of the prosthesis. It is also necessary for the rim to be correctly oriented in relation to other morphological planes (e.g. with respect to the bi-pupillary plane and with respect to the so-called Camper's plane), and for it to visibly project by a few millimetres (typically by 5 mm) from the lip in the position known as *"open rest".* In order to align the rim correctly and precisely, as well as in relatively short time periods, the dentist needs to have a substantial amount of experience. In fact, in order to shape the rim to the patient, the dentist must cut away wax from the rim to remove it in the areas where it is necessary to make the rim lower, and add wax (which is heated in advance) for the points where, on the other hand, it is necessary to increase the height of the rim, until the ideal position and orientation of the rim are found in the patient's mouth. The position of the rim should also be adjusted with precision in the three dimensions of space, so that the dental prosthesis does not project too far, or is not too recessed, or otherwise misaligned.

US-A-4 906 186 discloses a curved plate for the manufacture of a maxillary dental prosthesis, in particular a set of two curved plates arranged on a base plate and used for the manufacture of a maxillary dental prosthesis. Together, the two curved plates have a general U-shaped form, delimitated by two substantially parabola-shaped contours, with an outer edge corresponding to the contour of the vestibular walls of the incisor and molar teeth of the prosthesis to be built, and an inner edge corresponding to the contour of the lingual walls of said teeth. The plate has a flat portion on its lower face, and the base plate defines a visible reference point corresponding to the position of the interincisive papilla.

A primary object of the present invention is to make a device that at the same time complies with the double requirement of
- facilitating and speeding up the shaping operations of the bodies made from wax or another malleable material capable of temporarily supporting the artificial teeth, and
- drastically improving the level of precision of this work, according to the different morphological characteristics of each patient, regardless of the ability of the dentist.

Another object of the invention is to reduce the clinical times needed to make prostheses, and in particular to reduce the number of sittings needed at the dentist, the discomfort of the patient, as well as the costs incurred by them.

A further object of the invention is to precisely transfer the morphological data from the oral cavity of the patient to the prosthesis support, in a way practically independent from the degree of bone resorption reached by the patient.

Yet another object of the invention is to simplify and optimise the laboratory operations for detecting the morphological data of the oral cavity of the patient, possibly also reducing the number of people involved overall in these activities.

These and other objects and advantages, which shall be better understood hereafter, are accomplished according to the present invention by a plate element having the features defined in the attached claims 1 to 13. According to another aspect of the invention, there is proposed a method that includes the steps defined in claim 14.

A preferred but not limiting embodiment of the invention will now be described; reference is made to the attached drawings, in which:
figures 1 and 2 are, respectively, a top and a bottom plan view of an embodiment of a U-shaped plate according to the invention;
figure 3 is a cross-sectional view according to the line III-III of figure 2;
figure 4 is an exploded perspective view showing the arrangement of the U-shaped plate of figures 1-3 with respect to a testing base carrying the impression of an edentulous maxillary arch;
figure 5 is a schematic vertical cross-sectional view of a step of the process of the invention in which the unit comprising the plate and the base of figure 4, joined by a resin body, is applied to the edentulous maxillary arch of a patient; and
figures 6 and 7 are, respectively, a top view and a side view of a further *Central-Bearing-Point* component that can be supported by the plate of the present invention.

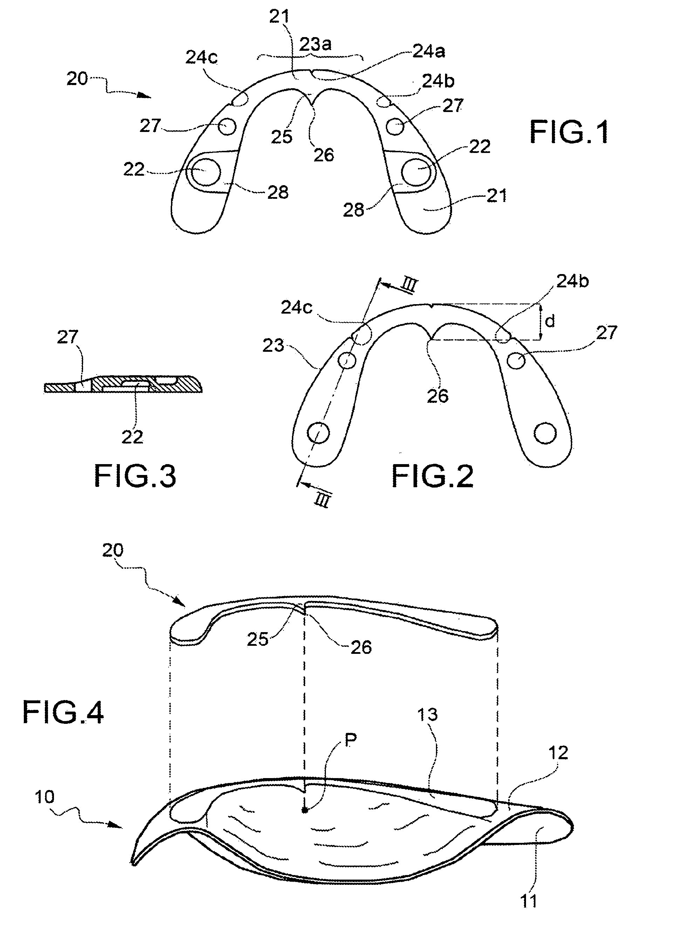

Referring initially to figure 4, reference numeral 10 indicates as a unit a testing base, consisting of a rigid body of a substantially uniform thickness that provides on its upper face 11 the impression of the edentulous maxillary arch of the patient. A certain amount of material with a malleable plastic consistency is applied on the opposite lower face 12, as described later on. In the present description and in the claims that follow, terms and expressions indicating positions and orientations, such as "upper", "lower", "front", "rear", inner" and "outer" are to be interpreted with reference to the mouth of a patient, unless stated otherwise. In figure 4 the base 10 is inverted.

A testing base of the type considered here can, for example, be made from a material that is photopolymerised after having detected the impression of the edentulous arch, as described in EP-A-2 030 585.

According to an embodiment of the present invention, reference numeral 20 indicates a rigid or relatively rigid plate having an overall U-shape and preferably made from a plastic material, more preferably acrylic resin. One of the two faces of the plate 20, in this case the lower face (with reference to its intended use) features a flat surface 21, in which two blind vertical recesses 22 are formed, each situated in one of the respective left and right branches of the plate.

The plate 20 is delimited by two substantially parabola-shaped contours: an outer edge 23, which will substantially correspond to the vestibular contour of the teeth of the prosthesis to be built, and an inner edge 24, which will substantially correspond to the lingual contour and that also features an appendix 25 the projects rearward from its front segment. The appendix has an apex 26 that constitutes a clearly visible reference point capable of corresponding to the position of the interincisive papilla. The position of the interincisive papilla generally does not vary appreciably following extractions or even in the presence of accentuated bone resorption that, as known, varies from one individual to the next.

The outer edge or vestibular contour 23 has a segment 23a at the front with a substantially elliptical arc shape, where three reference points are highlighted, in this example in the form of small notches: a central notch 24a that defines the position of the fraenulum at an intermediate point between the vestibular surfaces of the central incisor teeth, and two notches 24b, 24c, in the positions of the reference axes of the right and left canine teeth.

The distance "d" between the apex 26 of the appendix 25 and the central point of the outer edge 23 where the notch 24a is formed, is between 8 and 10 mm, and it is preferably 9 mm. This is the average anatomical distance that, in each individual person, separates the interincisive papilla from an ideal surface that envelopes the more vestibular walls of the upper central incisor teeth. With regard to the other dimensions of the plate 20, it should be understood that it can be shaped according to tighter or wider parabolas, according to the general morphology of the patient.

The plate 20 is used as follows. First of all the dentist detects the position P of the interincisive papilla and highlights it with a pen on the lower face 12 of the base 10. The plate 20 is then rested on the lower face 12 of the base, making the apex 26 of the appendix 25 coincide with the previously marked position P.

The plate 20 is then oriented angularly on the base 10 so as to align its left and right branches with the respective reliefs of the base that indicate the corresponding segments of the edentulous maxillary arch. The outline of the plate 20 is then traced on the lower face 12 of the base with a pen; in other words, the inner and outer edges of the plate 20 are marked on the face 12 so as to outline on the latter the borders of a curved area 13 in which all the incisor and pinless teeth will then be positioned.

It should be noted that the outline thus marked defines the position of the teeth of the prosthesis with reference to the interincisive papilla: this reference ensures that the teeth of the prosthesis will be positioned in a correct and clinically acceptable manner, in the patient's mouth, no matter what the degree of bone resorption reached. In other words, the arch of the molars of the maxilla will be located with a clinically acceptable approximation in the same position as that of the original teeth.

A strip of malleable resin 30 of plastic consistency having a height of about 1-2 cm is then applied onto the curved area 13, on the lower face 12 of the base. The material constituting the strip 30 is preferably a composite resin able to be photopolymerised by exposure to ultraviolet light (wavelength 350-400 nm) or halogen (wavelength 420-480 nm). The plate 20 is then applied underneath the strip of resin 30, so as to feature the flat surface 21 on the surface.

By gently pressing the plate 20 towards the base 10, a little bit of resin of the strip 30 will pass through two holes 27 or other equivalent retention means foreseen in the two branches of the plate to temporarily hold it on the base together with the resin.

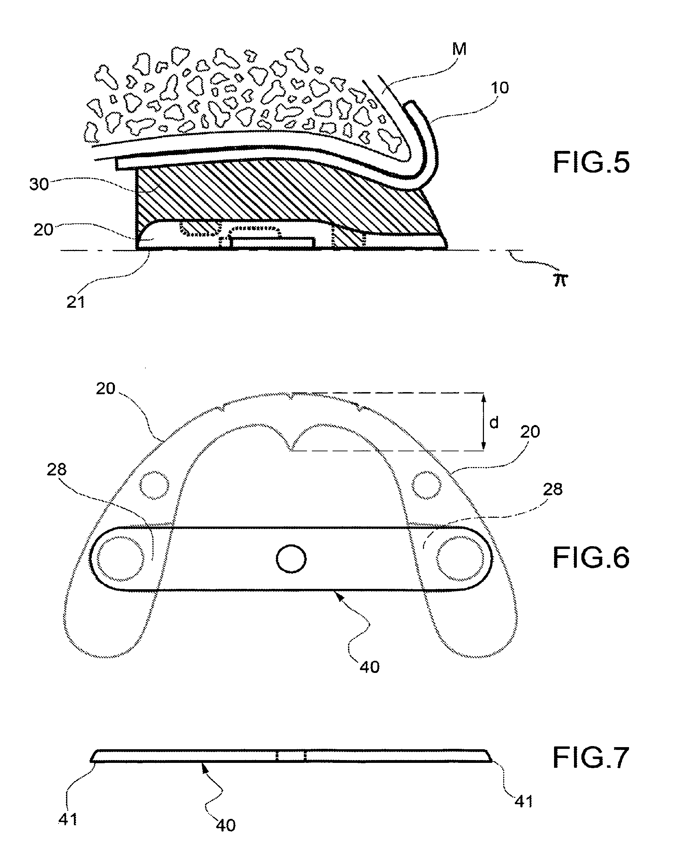

The unit consisting of base 10, resin 30 and plate 20 (figure 5) is then supplied to the dentist, who places it in the patient's oral cavity. The upper face 11 of the base, featuring the impression of the edentulous arch, adapts perfectly to it, making contact with the mucosa M. The dentist can easily manipulate the resin and the plate with his fingers, by suitably squashing the resin, locally lifting up or lowering the plate 20 to adjust its height and inclination until the lower flat surface 21 is perfectly positioned and oriented according to certain morphological planes that will determine an ideal occlusion plane π for the prosthesis with respect to the bone structure of the patient.

The subsequent steps for obtaining the prosthesis are known in the field and therefore do not need to be described.

As will be appreciated, these adaptation operations can be completed in short time periods; thanks to the relative rigidity of the plate 20, its lower flat surface 21 provides a precise surface that, with the conventional method with wax rims discussed in the introductory part of the description, can only be obtained after repeated removal by cutting of the edges of the rims in the areas that are too high or bulky, and after unavoidable additions of wax (previously heated) in the areas that are too low.

Tests carried out by the Applicant demonstrate that with a curved plate 20 having a distance "d" of 9 mm, which as stated represents the average anatomical measurement, excellent results are obtained on the majority of patients in terms of precision of positioning of the front teeth, with appreciable aesthetic advantages.

The blind holes 22 are used to determine a so-called occlusion key; the blind holes 22 create, by impression, a pair of corresponding projecting formations (not illustrated) in a strip of silicone or other malleable material applied on the jaw. Reference marks are thus obtained that will allow the dentist to manufacture a mandibular dental prosthesis that helps to define a correct occlusion with the maxillary one. Near to the blind holes 22 respective mutually facing recesses 28 are created that are used for supporting and maintaining the opposed ends 41 of a bar 40, illustrated in figures 6 and 7, of the known type, used to determine the intermaxillary relationship on the horizontal plane defined as centric occlusion.

The invention should not be considered to be limited to the embodiment described and illustrated here, which represents just one example embodiment of the plate, relative to the manufacture of a maxillary dental prosthesis. In addition, the materials selected for the plate, as well as its thickness and the width of the elliptical and parabolic arcs that define its edges can vary according to requirements. Finally, certain constructive details can also be modified. For example, the point of the plate that defines the position of the interincisive papilla can be made to be defined by a portion having a different shape to the appendix indicated here with 25.

## Claims

1. A curved plate (20) for the manufacture of a maxillary dental prosthesis, which features:
a generallly U-shaped form, delimiteted by two substantially parabola-shaped contours, an outer edge (23), corresponding to the contour of the vestibular walls of the incisor and molar teeth of the prosthesis to be built, and an inner edge (24), corresponding to the contour of the lingual walls of said teeth,
a flat surface (21) on its lower face,
a portion (25) defining a visible reference point (26) corresponding to the position of the interincisive papilla (P),
and wherein the distance (d) between the reference point (26) and a central point (24a) of the outer edge (23) which indicates a position situated between the most vestibular walls of the upper central incisor teeth, is comprised between 8 and 10 mm.

2. A plate according to claim 1, wherein the portion that defines the visible reference (26) is defined by the apex of an appendix (25), which extends from the inner edge (24).

3. A plate according to claim 2, wherein the appendix (25) projects rearward from a front segment of the inner edge (24).

4. A plate according to claim 1, wherein the distance (d) is 9 mm.

5. A plate according to claim 1, wherein the outer edge (23) features an elliptical arch-shaped central front segment (23a), where three reference marks are highlighted: a central reference mark (24a) defining the position of the fraenulum at an intermediate point between the vestibular surfaces of the central incisor teeth, and two lateral reference marks (24b, 24c) in the positions of the reference axes of the right and left canine teeth.

6. A plate according to claim 5, wherein the three reference marks (24a, 24b, 24c) are shaped like recessed notches.

7. A plate according to any one of the previous claims, wherein two vertical recesses (22), each located in one of the respective left and right branches of the plate, are made in the lower flat surface (21).

8. A plate according to claim 7, where said vertical recesses (22) are blind holes.

9. A plate according to any one of the previous claims, which features at least one through hole (27) that opens on the lower flat surface (21).

10. A plate according to claim 7 or 8, wherein two recesses (28), each located in one of the respective left and right branches of the plate, are near the vertical recesses (22) made in the lower flat surface (21), which recesses (28) are used for supporting and maintaining the opposed ends (41) of a bar (40).

11. A plate according to claim 10, wherein said recesses (28) mutually face each other.

12. A plate according to any one of the previous claims, made of a relatively rigid plastic material.

13. A plate according to claim 12, made of acrylic resin.

14. A method for the positioning and modelling of a malleable material capable of temporarily supporting the molar teeth according to given positions and orientations, comprising the steps of:
providing a testing base (10) made up of a rigid body of a substantially uniform thickness which features on its upper face (11) the impression of the edentulous maxillary arch of a patient;
providing a curved plate (20) according to any one of claims from 1 to 13;
detecting the position (P) of the interincisive papilla and highlighting it with a reference mark (P) on the lower face (12) of the base (10);
laying the plate (20) on the lower face (12) of the base (10), making the visible reference point (26) of the plate (20) coincide with the reference mark of the position (P) of the interincisive papilla on the base (10);
orienting the plate (20) on the base (10) so as to align the left and right branches of the curved plate (20) with respective reliefs of the base which indicate corresponding segments of the edentulous maxillary arch;
tracing on the lower face (12) of the base (10) at least a portion of the inner and outer edges (23, 24) of the plate (20), so as to outline on the base (10) the borders of a curved area (13) within which the incisor and molar teeth will then be positioned;
applying on the curved area (13) a strip of malleable material (30);
applying the plate (20) under the strip of malleable material (30), so as to feature the lower flat surface (21) on the surface,
placing the unit made up of the base (10), with the plate (20) and the malleable material (30) interposed between the base (10) and the plate (20) in the patient's mouth, by laying the upper face (11) of the base (10) against the mucosa which coats the edentulous maxillary arch;
manipulating the malleable material (30) and/or lifting up, lowering or tilting the plate (20) so as to adjust the height and the inclination of the lower flat surface (21) according to a desired occlusion plane (π).

## Patentansprüche

1. Gekrümmte Platte (20) zur Herstellung einer Oberkiefer-Zahnprothese mit den folgenden Merkmalen:
eine im Allgemeinen U-förmige Gestalt, begrenzt durch zwei im Wesentlichen parabolförmige Konturen, eine Außenkante (23), die der Kontur der Mundhöhlenwände der Schneide- und Backenzähne der zu bauenden Prothese entspricht, und eine Innenkante (24), die der Kontur der Lingualwände dieser Zähne entspricht,
eine flache Oberfläche (21) auf ihrer Unterseite,
einen Abschnitt (25), der einen sichtbaren Referenzpunkt (26) definiert, welcher der Position der Papilla interincisiva (P) entspricht,
und worin der Abstand (d) zwischen dem Referenzpunkt (26) und einem Mittelpunkt (24a) der Außenkante (23), der eine Position zwischen den Mundhöhlenwänden der oberen mittleren Schneidezähne anzeigt, zwischen 8 und 10 mm liegt.

2. Platte nach Anspruch 1, wobei der Abschnitt, der die sichtbare Referenz (26) definiert, durch den Scheitelpunkt eines Fortsatzes (25) definiert wird, der sich von der Innenkante (24) erstreckt.

3. Platte nach Anspruch 2, wobei der Fortsatz (25) von einem vorderen Segment der Innenkante (24) nach hinten vorragt.

4. Platte nach Anspruch 1, wobei der Abstand (d) 9 mm beträgt.

5. Platte nach Anspruch 1, wobei die Außenkante (23) ein ellipsenförmiges, bogenförmiges mittleres Vordersegment (23a) als Merkmal aufweist, worin drei Referenzmarkierungen hervorgehoben werden: eine mittlere Referenzmarkierung (24a), welche die Position des Fraenulum an einem Zwischenpunkt zwischen den Mundhöhlenflächen der mittleren Schneidezähne definiert, und zwei seitliche Referenzmarkierungen (24b, 24c) in den Positionen der Referenzachsen der rechten und linken Eckzähne.

6. Platte nach Anspruch 5, wobei die drei Referenzmarkierungen (24a, 24b, 24c) wie vertiefte Kerben geformt sind.

7. Platte nach einem der vorstehenden Ansprüche, wobei zwei vertikale Aussparungen (22), jeweils in einem der jeweiligen linken und rechten Abschnitte der Platte, in der unteren flachen Oberfläche (21) ausgeführt sind.

8. Platte nach Anspruch 7, wobei diese vertikalen Aussparungen (22) Blindlöcher sind.

9. Platte nach einem der vorstehenden Ansprüche, die zumindest ein Durchgangsloch (27) aufweist, das sich auf die untere flache Oberfläche (21) öffnet.

10. Platte nach Anspruch 7 oder 8, wobei zwei Aussparungen (28), jeweils in einem der jeweiligen linken und rechten Abschnitte der Platte, nahe der in der unteren flachen Oberfläche (21) ausgeführten vertikalen Aussparungen (22) liegen, wobei die Aussparungen (28) zum Stützen und Halten der gegenüberliegenden Enden (41) eines Stabes (40) verwendet werden.

11. Platte nach Anspruch 10, wobei diese Aussparungen (28) einander zugewandet sind.

12. Platte nach einem der vorstehenden Ansprüche, hergestellt aus einem relativ steifen Kunststoffmaterial.

13. Platte nach Anspruch 12, hergestellt aus Acrylharz.

14. Verfahren zum Positionieren und Modellieren eines formbaren Materials, das die Backenzähne entsprechend der gegebenen Positionen und Ausrichtungen temporär stützen kann, dabei die folgenden Schritte umfassend:
Vorsehen einer Testbasis (10) aus einem steifen Körper mit einer im Wesentlichen gleichmäßigen Dicke, welche auf ihrer Oberseite (11) den Abdruck des teilbezahnten Oberkiefers eines Patienten aufweist;
Vorsehen einer gekrümmten Platte (20) nach einem der Ansprüche 1 bis 13;
Erfassen der Position (P) der Papilla interincisiva und Hervorheben dieser mittels einer Referenzmarkierung (P) auf der unteren Fläche (12) der Basis (10);
Anordnen der Platte (20) auf der unteren Fläche (12) der Basis (10), so dass der sichtbare Referenzpunkt (26) der Platte (20) mit der Referenzmarkierung der Position (P) der Papilla incisiva auf der Basis (10) zusammenfällt;
Ausrichten der Platte (20) auf der Basis (10), um so den linken und den rechten Abschnitt der gekrümmten Platte (20) mit den jeweiligen Erhöhungen der Basis auszurichten, welche die entsprechenden Segmente des teilbezahnten Oberkiefers anzeigen;
Nachziehen auf der unteren Fläche (12) der Basis (10) zumindest eines Abschnitts der Innen- und der Außenkante (23, 24) der Platte (20), um somit auf der Basis (10) die Grenzen eines gekrümmten Bogens (13) nachzuzeichnen, innerhalb welches danach die Schneide- und Backenzähne positioniert werden;
Aufbringen auf der gekrümmten Fläche (13) eines Streifens aus einem formbaren Material (30);
Aufbringen der Platte (20) unter dem Streifen aus formbarem Material (30), um somit die untere flache Oberfläche (21) auf der Oberfläche auszubilden;
Anordnen der Einheit, die aus der Basis (10) besteht, mit der Platte (20) und dem zwischen der Basis (10) und der Platte (20) im Mund des Patienten angeordneten formbaren Materials (30), indem die obere Fläche (11) der Basis (10) gegen die Schleimhaut gelegt wird, die das teilbezahnte Oberkiefer bedeckt;
Manipulieren des formbaren Materials (30) und/oder Anheben, Absenken oder Neigen der Platte (20), um somit die Höhe und die Neigung der unteren flachen Oberfläche (21) entsprechend der erwünschten Verschlussebene (π) einzustellen.

## Revendications

1. Plaquette incurvée (20) pour la fabrication d'une prothèse dentaire maxillaire, qui présente :
une forme généralement en U, délimitée par deux contours sensiblement en forme de parabole, un bord externe (23) correspondant au contour des parois vestibulaires des incisives et des molaires de la prothèse à fabriquer, et un bord interne (24) correspondant au contour des parois linguales desdites dents,
une surface plate (21) sur sa face inférieure,
une partie (25) définissant un point de référence visible (26) correspondant à la position du tubercule palatin rétro-incisif (P),
et dans laquelle la distance (d) entre le point de référence (26) et un point central (24a) du bord externe (23) qui indique une position située entre les parois les plus vestibulaires des incisives centrales supérieures, est comprise entre 8 et 10 mm.

2. Plaquette selon la revendication 1, dans laquelle la partie qui définit la référence visible (26) est définie par le sommet d'un appendice (25), qui s'étend à partir du bord interne (24).

3. Plaquette selon la revendication 2, dans laquelle l'appendice (25) fait saillie vers l'arrière à partir d'un segment avant du bord interne (24).

4. Plaquette selon la revendication 1, dans laquelle la distance (d) est de 9 mm.

5. Plaquette selon la revendication 1, dans laquelle le bord externe (23) présente un segment avant central en forme d'arc elliptique (23a), dans laquelle trois marques de référence sont mises en relief : une marque de référence centrale (24a) définissant la position du frein au niveau d'un point intermédiaire entre les surfaces vestibulaires des incisives centrales et deux marques de référence latérales (24b, 24c) dans les positions des axes de référence des canines droite et gauche.

6. Plaquette selon la revendication 5, dans laquelle trois marques de référence (24a, 24b, 24c) sont formées comme des encoches évidées.

7. Plaquette selon l'une quelconque des revendications précédentes, dans laquelle deux évidements verticaux (22), chacun positionné dans l'une des branches gauche et droite respectives de la plaquette, sont réalisés dans la surface plate inférieure (21).

8. Plaquette selon la revendication 7, dans laquelle lesdits évidements verticaux (22) sont des trous borgnes.

9. Plaquette selon l'une quelconque des revendications précédentes, qui présente au moins un trou de passage (27) qui s'ouvre sur la surface plate inférieure (21).

10. Plaquette selon la revendication 7 ou 8, dans laquelle deux évidements (28), chacun positionné dans l'une des branches gauche et droite respectives de la plaquette, sont à proximité des évidements verticaux (22) réalisés dans la surface plate inférieure (21), lesquels évidements (28) sont utilisés pour supporter et maintenir les extrémités opposées (41) d'une barre (40).

11. Plaquette selon la revendication 10, dans laquelle lesdits évidements (28) se font mutuellement face.

12. Plaquette selon l'une quelconque des revendications précédentes, réalisée avec une matière plastique relativement rigide.

13. Plaquette selon la revendication 12, réalisée à partir d'une résine acrylique.

14. Procédé pour le positionnement et le modelage d'un matériau malléable pouvant temporairement supporter les molaires selon des positions et des orientations données, comprenant les étapes consistant à :
prévoir une base de test (10) composée d'un corps rigide d'une épaisseur sensiblement uniforme qui présente sur sa face supérieure (11), l'empreinte de l'arc maxillaire édenté d'un patient ;
prévoir une plaquette incurvée (20) selon l'une quelconque des revendications 1 à 13 ;
détecter la position (P) du tubercule palatin rétro-incisif et le mettre en relief avec une marque de référence (P) sur la face inférieure (12) de la base (10) ;
poser la plaquette (20) sur la face inférieure (12) de la base (10), faisant coïncider le point de référence visible (26) de la plaquette (20) avec la marque de référence de la position (P) du tubercule palatin rétro-incisif sur la base (10) ;
orienter la plaquette (20) sur la base (10) afin d'aligner les branches gauche et droite de la plaquette incurvée (20) avec des reliefs respectifs de la base qui indiquent des segments correspondants de l'arc maxillaire édenté ;
tracer sur la face inférieure (12) de la base (10) au moins une partie des bords interne et externe (23, 24) de la plaquette (20), afin de souligner sur la base (10), les bordures d'une zone incurvée (13) à l'intérieur de laquelle les incisives et les molaires seront ensuite positionnées ;
appliquer sur la zone incurvée (13), une bande de matériau malléable (30) ;
appliquer la plaquette (20) sous la bande de matériau malléable (30) afin de présenter la surface plate inférieure (21) sur la surface,
placer l'unité composée de la base (10), avec la plaquette (20) et le matériau malléable (30) intercalé entre la base (10) et la plaquette (20) dans la bouche du patient, en posant la face supérieure (11) de la base (10) contre la muqueuse qui recouvre l'arc maxillaire édenté ;
manipuler le matériau malléable (30) et/ou lever, abaisser ou incliner la plaquette (20) afin d'ajuster la hauteur et l'inclinaison de la face plate inférieure (21) selon un plan d'occlusion souhaité (π).
